# EUROPEAN PATENT APPLICATION

(11) **EP 1 973 350 A1**
(43) Date of publication of application: **24.09.2008**
(21) Application number: 07702051.9
(22) Date of filing: 11.01.2007
(51) Int. Cl.: H04N 7/46

(54) **METHOD AND DEVICE FOR PERFORMING INTERPOLATION IN SCALABLE IN VIDEO COMPRESSION**

(30) Priority: 11.01.2006 CN 200610048983
(71) Applicant: Huawei Technologies Co., Ltd., Longgang District, Shenzhen Guangdong 518129 (CN)
(72) Inventor: YU, Lu, Shenzhen Guangdong 518129 (CN); ZHANG, Cixun, Shenzhen Guangdong 518129 (CN); SUN, Qichao, Shenzhen Guangdong 518129 (CN); XIONG, Lianhuan, Shenzhen Guangdong 518129 (CN)
(74) Representative: Hengelhaupt, Jürgen
(86) International application number: PCT/CN2007/000119
(87) International publication number: WO 2007/079693

(57) **Abstract**

An interpolating method and a device for interpolating in grade video compression are disclosed. They apply mutual independent accurate interpolation filters to the luminance component and the chroma component, in which, their tap coefficients are mutual independent and the filters can be symmetric or not. And the interpolating result is used in interpolating in scalable video compression for a good effect. The increment of the compression efficiency and the reduction of the complexity can be realized. The interpolating method can be executed in the interpolating device.

## Description

### Field of the Invention

The present invention relates to the field of electronic digital data processing technologies and in particular to a method and device for performing interpolation in scalable video coding.

### Background of the Invention

Currently, in the field of video communication technologies, video signals are increasing-widely transmitted as digital video signals. During the transmission of the digital video signals, the video signals to be transmitted are generally subject to compression processes in various forms to ensure a low data rate so as to improve the transmission efficiency. For this reason, different video compression standards have been defined in the industry as operational specifications for compression of video signals.

In a well-known video system, various video coding solutions or their modifications can be generally used for compression coding of video signals based upon the different kinds of video compression standards. Consequently, use of scalable coded video streams is sometimes required in order to transmit a compressed video stream to a plurality of decoders with different capabilities, performances and requirements. The use of scalability of video coding can enable the decoders to make use of only a part of the video streams and to decode an entire image from the part. It should be noted that the quality level of the decoded image depends upon how many video streams the decoders have used and the way to constitute the scalable compression video streams.

In the existing video compression standards, the scalability of space, signal-to-noise ratio and time is generally achieved by a scalable architecture. The coded video is divided into two or more independent video streams corresponding to different layers. In such a scalable architecture, a mixed prediction coding loop is used to code a base layer as in an un-scalable coding solution. Thus, a data stream (i.e., a video stream) can be generated, and when this data stream is decoded, an entire image of low quality can be generated from the data stream. An enhanced layer linked with the base layer includes data of residual signals for the corresponding image of the base layer. An enhanced data stream can be generated by this enhanced layer, and when the enhanced data stream is combined with information of the base layer, the enhanced data stream can provide a better video quality level.

Upon inter-layer prediction in scalable video coding, base layer signals corresponding to each enhanced layer are required to be subject to interpolation so as to be used as prediction signals of the enhanced layer, and then the enhanced layer is compressed. Interpolation for the base layer signals is an important process which influences the performance of scalable video coding. Previous interpolation processes apply interpolation filters with the same precision to the luminance component and the chrominance component, which results in a relatively high complexity of calculation. Moreover, a eudipleural design is mostly used for the interpolation filters, which thus restricts a further improvement of compression performance.

### Summary of the Invention

Embodiments of the invention provide a method and device for performing interpolation in scalable video coding, which can improve the prediction precision and reduce the complexity when performing prediction and interpolation among different layers.

An embodiment of the invention provides a method for performing interpolation in scalable video coding, which is used for inter-layer prediction in scalable video coding, the inter-layer prediction including performing interpolation filtering processes on luminance components and chrominance components, and the performing of the interpolation filtering processes includes:
performing the interpolation filtering processes on the luminance components and the chrominance components respectively by using interpolation filters with precisions determined independently of each other, tap coefficients of the interpolation filters respectively used for the interpolation filtering process on the luminance components and the chrominance components being determined independently of each other.

An embodiment of the invention provides a device for performing interpolation in scalable video coding, including:
luminance interpolation filters with a first predetermined precision and first predetermined tap coefficients adapted to perform interpolation filtering process on luminance components;
chrominance interpolation filters with a second predetermined precision and second predetermined tap coefficients adapted to perform interpolation filtering process on chrominance components,
where the first predetermined precision and the second predetermined precision are independent of each other, and the first predetermined tap coefficients and the second predetermined tap coefficients are independent of each other.

The embodiments of the invention provide the following advantageous effects over the background art: since the processes are performed separately according to different features of luminance and chrominance in the embodiments of the invention, that is, interpolation filters with precisions independent of each other are used for luminance components and chrominance components, and tap coefficients of the interpolation filters are also independent of each other, therefore the embodiments of the invention can effectively reduce the complexity of the coding and compression process, and can improve the coding efficiency at the same time. Further, the embodiments of the invention are not limited to the field of video coding or image coding, and can be extended to other signal processing applications.

### Brief Description of the Drawings

Figure 1 is a schematic diagram showing phases of integer pixels denoted with capitals and 1/16 pixels denoted with numerals;
Figure 2 is a schematic diagram showing phases of integer pixels denoted with capitals and 1/8 pixels denoted with numerals;
Figure 3 is a schematic diagram showing phases of integer pixels denoted with capitals and 1/4 pixels denoted with numerals;
Figure 4 is a schematic diagram showing phases of integer pixels denoted with capitals and 1/2 pixels denoted with numerals;
Figure 5 is a schematic structural diagram showing a specific implementation of the device according to the invention;
Figure 6 is a schematic structural diagram showing an embodiment of the device for performing interpolation in scalable video coding.

### Detailed Descriptions of the Preferred Embodiments

For the convenience of understanding the invention, the detailed description of the embodiments in various application scenarios according to the invention will be given hereinafter with reference to the accompanying drawings.

*Application Scenario I*

In this application scenario, for the latest scalable coding technology, when an ordinary space scalability technology is used, blocks corresponding to the base layer need to firstly subject to interpolation of luminance components and chrominance components if macroblocks of the enhanced layer are coded in an intra-frame base layer mode (INTRA_Base). Two embodiments will be provided for this application scenario, but the invention will not only be limited to the following embodiments when being put into practice. That is, other embodiments according to the invention can also be implemented in this application scenario.

*Embodiment 1*

In this embodiment, interpolation filters with separate precisions are used respectively for corresponding interpolation filtering processes of luminance components and chrominance components, particularly as follows.

For the luminance components, 6-tap interpolation filters with a 1/2-pel accuracy in a form of {*Co*_{1,} *Co*₂*, Co*₃*, Co*₄*, Co*₅*, Co*₆}/[*Co*₁ + *Co*₂ + *Co*₃ + *Co*₄ + *Co*₅ + *Co*₆] may be used, *Coᵢ* being tap coefficients of the filters, where *i* =1...6.

Specific tap coefficients can be [1, -5, 20, 20, -5, 1]/32, and the tap coefficients *Coᵢ* of the interpolation filters can also take values in the range of *round* (*Coᵢ* × 2*^{j}*) ± 1, where *i* = 1 ...6 , and *j* is an arbitrary integer. That is, the tap coefficients can also be adjusted to [1×2^{J}±1, -5×2^{j}±1, 20×2^{j}±1, 20×2^{j}±1, -5×2^{j}±1, 1×2±1]/{(1×2^{j}±1)+(-5×2^{j}±1)+(20×2^{j}±1)+(20×2^{j}±1)+(-5×2^{j}±1)+(1×2^{j}±1)}, and *j* is an arbitrary integer.

For the chrominance components, 2-tap interpolation filters with a 1/2-pel accuracy in a form of {*Do*₁, *Do*₂} /[*Do*₁ + *Do*₂] may be used, *Doᵢ* being tap coefficients of the filters, where i=1...2.

Specific tap coefficients can be [16, 16]/32, and the tap coefficients *Doᵢ* of the interpolation filters can also take values in the range of *round* (*Doᵢ* × *2^{j}*)±1, where *i* =1...2, and *j* is an arbitrary integer. That is, the tap coefficients can also be adjusted to [16×2^{j}±1, 16×2^{j}±1]/{(16×2^{j}±1)+(16×2^{j}±1)}, and *j* is an arbitrary integer.

*Embodiment 2*

In this embodiment, for the luminance components, 4-tap interpolation filters with a 1/2-pel accuracy in a form of {*Eo*₁*, Eo*₂*, Eo*₃*, Eo*₄}/[*Eo*₁ + *Eo*₂ + *Eo*₃ + *Eo*₄] are used, *Eoᵢ* being tap coefficients of the filters, where *i* =1...4. Specific tap coefficients can be [-5, 21, 21, -5]/32, and the tap coefficients *Eoᵢ* of the interpolation filters can also take values including *round* (*Eoᵢ* × *2^{j}*)±1 , where *i* =1...4, and *j* is an arbitrary integer. For the chrominance components, the same interpolation filters as in the Embodiment 1, i.e., the 2-tap interpolation filters with a 1/2-pel accuracy, can be used.

Particularly in the Embodiment 1 and the Embodiment 2, the ordinary space scalability technology refers to that the ratio between the image size of the base layer and the image size of the enhanced layer must be 2 or multiples of 2.

*Application Scenario II*

In this application scenario, for the latest scalable coding technology, when an Extended Space Scalability (ESS) technology is used, blocks corresponding to the base layer need to firstly subject to interpolation of luminance components and chrominance components if macroblocks of the enhanced layer are coded in an intra-frame base layer mode (INTRA_Base). Eight embodiments will be provided for this application scenario, but the invention will not only be limited to the following embodiments when being put into practice. That is, other embodiments according to the invention can also be implemented in this application scenario.

In the case of using the Extended Space Scalability (ESS) technology, interpolation filters which can be used for the luminance components include any one of 6-tap interpolation filter with a 1/16-pel accuracy, 4-tap interpolation filter with a 1/16-pel accuracy, 6-tap interpolation filter with a 1/8-pel accuracy, and 4-tap interpolation filter with a 1/8-pel accuracy, and interpolation filters which can be used for the chrominance components include any one of 2-tap interpolation filter with a 1/16-pel accuracy, 2-tap interpolation filter with a 1/8-pel accuracy, 2-tap interpolation filter with a 1/4-pel accuracy, and 2-tap interpolation filter with a 1/2-pel accuracy. Further, the precision of the interpolation filters used for the luminance components is required to be lower than the precision of the interpolation filters used for the chrominance components. Specifically, any of the following combinations can be used.

(1) 6-tap interpolation filters with a 1/16-pel accuracy are used for the luminance components, and 2-tap interpolation filters with a 1/16-pel accuracy or 2-tap interpolation filters with a 1/8-pel accuracy or 2-tap interpolation filters with a 1/4-pel accuracy or 2-tap interpolation filters with a 1/2-pel accuracy are used for the chrominance components.

(2) 4-tap interpolation filters with a 1/16-pel accuracy are used for the luminance components, and 2-tap interpolation filters with a 1/16-pel accuracy or 2-tap interpolation filters with a 1/8-pel accuracy or 2-tap interpolation filters with a 1/4-pel accuracy or 2-tap interpolation filters with a 1/2-pel accuracy are used for the chrominance components.

(3) 6-tap interpolation filters with a 1/8-pel accuracy are used for the luminance components, and 2-tap interpolation filters with a 1/8-pel accuracy or 2-tap interpolation filters with a 1/4-pel accuracy or 2-tap interpolation filters with a 1/2-pel accuracy are used for the chrominance components.

(4) 4-tap interpolation filters with a 1/8-pel accuracy are used for the luminance components, and 2-tap interpolation filters with a 1/8-pel accuracy or 2-tap interpolation filters with a 1/4-pel accuracy or 2-tap interpolation filters with a 1/2-pel accuracy are used for the chrominance components.

Specific implementation forms of the respective interpolation filters which can be used as above will be described hereinafter.

(1) The 6-tap interpolation filters with a 1/16-pel accuracy are in a form of:

{*Go*₁, *Go*₂, *Go*₃, *Go*₄, *Go*₅, *Go*₆}/[*Go*₁ + *Go*₂ + *Go*₃ + *Go*₄ + *Go*₅ + *Go*₆], *Goᵢ* being tap coefficients of the filters, where *i* =1...6. Specific tap coefficients are dependent upon phases. From phase 0 to phase 15, corresponding tap coefficients are, respectively, [0, 0, 32, 0, 0, 0]/32, [0, -2, 32, 2, 0, 0]/32, [1, -3, 31, 4, -1, 0]/32, [1, -4, 30, 7, -2, 0]/32, [1, -4, 28, 9, -2, 0]/32, [1, -5, 27, 11, -3, 1]/32, [1, -5, 25, 14, -3, 0]/32, [1, -5, 22, 17, -4, 1]/32, [1, -5, 20, 20, -5, 1]/32, [1, -4, 17, 22, -5, 1]/32, [0, -3, 14, 25, -5, 1]/32, [1, -3, 11, 27, -5, 1]/32, [0, -2, 9, 28, -4, 1]/32, [0, -2, 7, 30, -4, 1]/32, [0, -1,4, 31, -3,1]/32, [0, 0, 2, 32, -2, 0]/32. Further, the tap coefficients of the interpolation filters *Goᵢ* can also take values including *round* (*Goᵢ* × 2*^{j}*) ± 1, where *i* =1...6, and *j* is an arbitrary integer.

(2) The 6-tap interpolation filters with a 1/8-pel accuracy are in a form of:

{*Io*₁ *, Io*₂ *, Io*₃ *, Io*₄ *, Io*₅ *, Io*₆} *l*[*Io*₁ + *Io*₂ + *Io*₃ + *Io*₄ + *Io*₅ + *Io*₆], *Ioᵢ* being tap coefficients of the filters, where *i* =1...6 . Specific tap coefficients are dependent upon phases. From phase 0 to phase 8, corresponding tap coefficients are, respectively, [0, 0, 32, 0, 0, 0]/32, [1, -3, 31, 4, -1, 0]/32, [1, -4, 28, 9, -2, 0]/32, [1, -5, 25, 14, -3, 0]/32, [1, -5, 20, 20, -5, 1]/32, [0, -3, 14, 25, -5, 1]/32, [0, -2, 9, 28, -4, 1]/32, [0, -1, 4, 31, -3, 1]/32. Further, the tap coefficients of the interpolation filters *Ioᵢ* can also take values including *round* (*Ioᵢ* × 2^{j}) ± 1, where *i* =1...6, and *j* is an arbitrary integer.

(3) The 4-tap interpolation filters with a 1/16-pel accuracy are in a form of:

{*Ko*₁*, Ko*₂ *Ko*₃*, Ko*₄} /[*Ko*₁ *+ Ko*₂ *+ Ko*₃ *+ Ko*₄] *, Koᵢ* being tap coefficients of the filters, where *i* =1...4. Specific tap coefficients are dependent upon phases. From phase 0 to phase 16, corresponding tap coefficients are, respectively, [0, 32, 0, 0]/32, [-2, 32, 2, 0]/32, [-3, 32, 4, -1]/32, [-4, 31, 6, -1]/32, [-5, 29, 9, -2]/32, [-5, 28, 12, -3]/32, [-5, 26, 15, -4]/32, [-5, 23, 18, -4]/32, [-5, 21, 21, -5]/32, [-4, 18, 23, -5]/32, , [-4, 15, 26, -5]/32, [-3, 12, 28, -5]/32, [-2, 9, 29, -5]/32, [-1, 6, 31, -4]/32, [-1, 4, 31, -3]/32, [0, 2, 32, -2]/32. Further, the tap coefficients of the interpolation filters *Koᵢ* can also take values including *round* (*Koᵢ* x 2*^{j}*) ± 1, where *i* =1...4, and *j* is an arbitrary integer.

(4) The 4-tap interpolation filters with a 1/8-pel accuracy are in a form of:

{*Oo*₁, *Oo*₂, *Oo*₃, *Oo*₄} /[*Oo*₁ + *Oo*₂ + *Oo*₃ + *Oo*₄], *Ooᵢ* being tap coefficients of the filters, where *i* =1...4 . Specific tap coefficients are dependent upon phases. From phase 0 to phase 8, corresponding tap coefficients are, respectively, [0, 32, 0, 0]/32, [-3, 32, 4, -1]/32, [-5, 29, 9, -2]/32, [-5, 26, 15, -4]/32, [-5, 21, 21, -5]/32, [-4, 15, 26, -5]/32, [-2, 9, 29, -5]/32, [-1, 4, 31, -3]/32. Further, the tap coefficients of the interpolation filters *Ooᵢ* can also take values including *round* (*Ooᵢ* × *2^{j}*) ± 1, where *i* = 1...4, and *j* is an arbitrary integer.

(5) The 2-tap interpolation filters with a 1/16-pel accuracy are in a form of {*Fo*₁, *Fo*₂} /[*Fo*₁ *+ Fo*₂], *Foᵢ* being tap coefficients of the filters, where *i* =1...2. Specific tap coefficients are dependent upon phases. From phase 0 to phase 16, corresponding tap coefficients are, respectively, [32, 0]/32, [30, 2]/32, [28, 4]/32, [27, 5]/32, [25, 7]/32, [22, 10]/32, [20, 12]/32, [18, 14]/32, [16, 16]/32, [14, 18]/32, [12, 20]/32, [10, 22]/32, [7, 25]/32, [5, 27]/32, [4, 28]/32, [2, 30]/32. Further, the tap coefficients of the interpolation filters *Foᵢ* can also take values including *round (Foᵢ* × *2^{j}*) ± 1*,* where *i* = 1...2 , and *j* is an arbitrary integer.

(6) The 2-tap interpolation filters with a 1/8-pel accuracy are in a form of {*Ho*₁, *Ho*₂} *l*[*Ho*₁ + *Ho*₂], *Hoᵢ* being tap coefficients of the filters, where *i* =1...2. Specific tap coefficients are dependent upon phases. From phase 0 to phase 8, corresponding tap coefficients are, respectively, [32, 0]/32, [28, 4]/32, [25, 7]/32, [20, 12]/32, [16, 16]/32, [12, 20]/32, [7, 25]/32, [4, 28]/32. Further, the tap coefficients of the interpolation filters *Hoᵢ* can also take values including *round* (*Hoᵢ* × 2*^{j}*) ± 1, where *i* =1...2, and *j* is an arbitrary integer.

(7) The 2-tap interpolation filters with a 1/4-pel accuracy are in a form of:

{*Mo*₁, *Mo*₂} /[*Mo*₁ + *Mo*₂], *Moᵢ* being tap coefficients of the filters, where *i* =1...2. Specific tap coefficients are dependent upon phases. From phase 0 to phase 4, corresponding tap coefficients are, respectively, [32, 0]/32, [25, 7]/32, [16, 16]/32, [7, 25]/32. Further, the tap coefficients *Moᵢ* can also take values including *round* (*Moᵢ* × 2^{j}) ± 1, where *i* =1 ... 2, and *j* is an arbitrary integer.

(8) The 2-tap interpolation filters with a 1/2-pel accuracy are in a form of:

{*No*₁, *No*₂} /[*No*₁ + *No*₂], *Noᵢ* being tap coefficients of the filters, where *i* =1...2 . Specific tap coefficients are dependent upon phases. When the phase is 0, the tap coefficients are [32, 0]/32, and when the phase is 1, the tap coefficients are [16, 16]/32. Further, the tap coefficients of the interpolation filters *Noᵢ* can also take values including *round* (*Noᵢ* × 2*^{j}*) ±1, where *i* =1...2, and *j* is an arbitrary integer.

The eight embodiments of the invention in the application scenario II will be described respectively hereinafter.

*Embodiment 1*

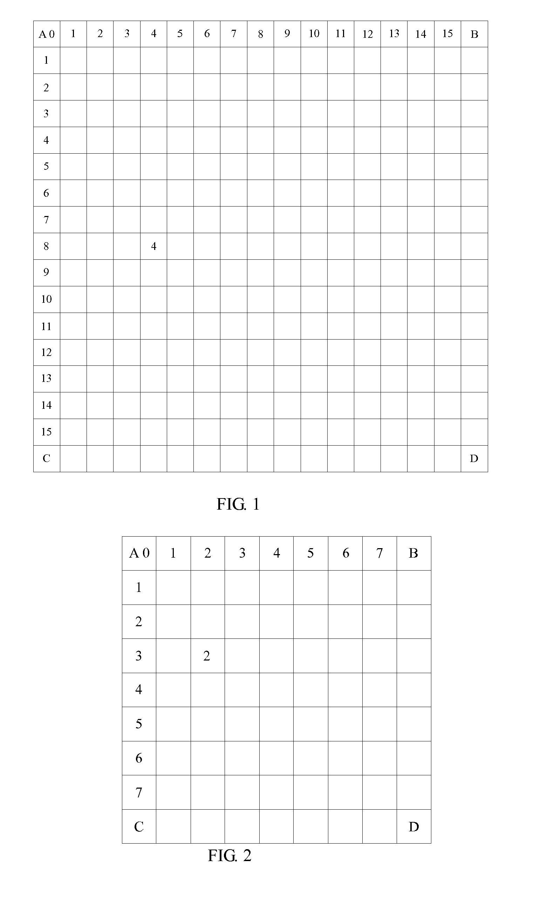

In this embodiment, interpolation with a 1/16-pel accuracy can be used for the luminance components, and the corresponding interpolation filter is provided with 6 taps. Tap coefficients are dependent upon phases, particularly as illustrated in Figure 1 as follows:

When the phase is 0, the tap coefficients are [0, 0, 32, 0, 0, 0]/32; when the phase is 1, the tap coefficients are [0, -2, 32, 2, 0, 0]/32; when the phase is 2, the tap coefficients are [1, -3, 31, 4, -1, 0]/32; when the phase is 3, the tap coefficients are [1, -4, 30, 7, -2, 0]/32; when the phase is 4, the tap coefficients are [1, -4, 28, 9, -2, 0]/32; when the phase is 5, the tap coefficients are [1, -5, 27, 11, -3, 1]/32; when the phase is 6, the tap coefficients are [1, -5, 25, 14, -3, 0]/32; when the phase is 7, the tap coefficients are [1, -5, 22, 17, -4, 1]/32; when the phase is 8, the tap coefficients are [1, -5, 20, 20, -5, 1]/32; when the phase is 9, the tap coefficients are [1, -4, 17, 22, -5, 1]/32; when the phase is 10, the tap coefficients are [0, -3, 14, 25, -5, 1]/32; when the phase is 11, the tap coefficients are [1, -3, 11, 27, -5, 1]/32; when the phase is 12, the tap coefficients are [0, -2, 9, 28, -4, 1]/32; when the phase is 13, the tap coefficients are [0, -2, 7, 30, -4, 1]/32; when the phase is 14, the tap coefficients are [0, -1, 4, 31, -3, 1]/32; when the phase is 15, the tap coefficients are [0, 0, 2, 32, -2, 0]/32.

Interpolation with a 1/16-pel accuracy is used for the chrominance components, and the filters for performing interpolation are provided with 2 taps. Tap coefficients are dependent upon phases, particularly as illustrated in Figure 1 as follows:

When the phase is 0, the tap coefficients are [32, 0]/32; when the phase is 1, the tap coefficients are [30, 2]/32; when the phase is 2, the tap coefficients are [28, 4]/32; when the phase is 3, the tap coefficients are [27, 5]/32; when the phase is 4, the tap coefficients are [25, 7]/32; when the phase is 5, the tap coefficients are [22, 10]/32; when the phase is 6, the tap coefficients are [20, 12]/32; when the phase is 7, the tap coefficients are [18, 14]/32; when the phase is 8, the tap coefficients are [16, 16]/32; when the phase is 9, the tap coefficients are [14, 18]/32; when the phase is 10, the tap coefficients are [12,20]/32; when the phase is 11, the tap coefficients are [10, 22]/32; when the phase is 12, the tap coefficients are [7, 25]/32; when the phase is 13, the tap coefficients are [5, 27]/32; when the phase is 14, the tap coefficients are [4, 28]/32; when the phase is 15, the tap coefficients are [2, 30]/32.

As illustrated in Figure 1, a process of interpolation for the luminance components includes:

(1) Firstly, vertical interpolation is performed, where interpolation is performed using A and two integer pixels which are the closest and the second closest just above A as well as C and two integer pixels which are the closest and the second closest just below C to obtain 1/16-pel with sixteen different phases between the integer pixels A and C, and interpolation is performed using B and two integer pixels which are the closest and the second closest just above B as well as D and two integer pixels which are the closest and the second closest just below D to obtain 1/16-pel with sixteen different phases between the integer pixels B and D.

(2) Then, horizontal interpolation is performed, where interpolation is performed using A and two integer pixels which are the closest and the second closest on the left side of A as well as B and two integer pixels which are the closest and the second closest on the right side of B to obtain 1/16-pel with sixteen different phases between the integer pixels A and B. Other 1/16-pel, such as the pixel with a phase of 4 in the middle of Figure 1, are obtained from interpolation performed by luminance interpolation filters with a phase of 4, using a 1/16-pel with a phase of 8 between A and C, a 1/16-pel with a phase of 8 between B and D, a 1/16-pel with a phase of 8 obtained by vertical interpolation between the integer pixel which is the closest on the left side of A and the integer pixel which is the closest on the left side of C, a 1/16-pel with a phase of 8 obtained by vertical interpolation between the integer pixel which is the second closest on the left side of A and the integer pixel which is the second closest on the left side of C, a 1/16-pel with a phase of 8 obtained by vertical interpolation between the integer pixel which is the closest on the right side of B and the integer pixel which is the closest on the right side of D, and a 1/16-pel with a phase of 8 obtained by vertical interpolation between the integer pixel which is the second closest on the right side of B and the integer pixel which is the second closest on the right side of D.

As illustrated in Figure 1, a process of interpolation for the chrominance components includes:

(1) Firstly, vertical interpolation is performed, where interpolation is performed using A and C to obtain 1/16-pel with sixteen different phases between the integer pixels A and C, and interpolation is performed using B and D to obtain 1/16-pel with sixteen different phases between the integer pixels B and D.

(2) Then, horizontal interpolation is performed, where interpolation is performed using A and B to obtain 1/16-pel with sixteen different phases between the integer pixels A and B. Other 1/16-pel, such as the pixel with a phase of 4 in the middle of Figure 1, are obtained from interpolation performed by chrominance interpolation filters with a phase of 4, using a 1/16-pel with a phase of 8 between A and C, and a 1/16-pel with a phase of 8 between B and D.

Here, use of the extended space scalability (ESS) technology means that the ratio between the image size of the base layer and the image size of the enhanced layer is arbitrary.

*Embodiment 2*

In this embodiment, interpolation with a 1/16-pel accuracy is used for the luminance components, and the filter for performing interpolation is provided with 6 taps. Tap coefficients are dependent upon phases, particularly as illustrated in Figure 1 as follows:

When the phase is 0, the tap coefficients are [0, 0, 32, 0, 0, 0]/32; when the phase is 1, the tap coefficients are [0, -2, 32, 2, 0, 0]/32; when the phase is 2, the tap coefficients are [1, -3, 31, 4, -1, 0]/32; when the phase is 3, the tap coefficients are [1, -4, 30, 7, -2, 0]/32; when the phase is 4, the tap coefficients are [1, -4, 28, 9, -2, 0]/32; when the phase is 5, the tap coefficients are [1, -5, 27, 11, -3, 1]/32; when the phase is 6, the tap coefficients are [1, -5, 25, 14, -3, 0]/32; when the phase is 7, the tap coefficients are [1, -5, 22, 17, -4, 1]/32; when the phase is 8, the tap coefficients are [1, -5, 20, 20, -5, 1]/32; when the phase is 9, the tap coefficients are [1, -4, 17, 22, -5, 1]/32; when the phase is 10, the tap coefficients are [0, -3, 14, 25, -5, 1]/32; when the phase is 11, the tap coefficients are [1, -3, 11, 27, -5, 1]/32; when the phase is 12, the tap coefficients are [0, -2, 9, 28, -4, 1]/32; when the phase is 13, the tap coefficients are [0, -2, 7, 30, -4, 1]/32; when the phase is 14, the tap coefficients are [0, -1, 4, 31, -3, 1]/32; when the phase is 15, the tap coefficients are [0, 0, 2, 32, -2, 0]/32.

Interpolation with a 1/8-pel accuracy is used for the chrominance components, and the filter for performing interpolation is provided with 2 taps. Tap coefficients are dependent upon phases, particularly as illustrated in Figure 2 as follows:

When the phase is 0, the tap coefficients are [32, 0]/32; when the phase is 1, the tap coefficients are [28, 4]/32; when the phase is 2, the tap coefficients are [25, 7]/32; when the phase is 3, the tap coefficients are [20, 12]/32; when the phase is 4, the tap coefficients are [16, 16]/32; when the phase is 5, the tap coefficients are [12, 20]/32; when the phase is 6, the tap coefficients are [7, 25]/32; when the phase is 7, the tap coefficients are [4, 28]/32.

As illustrated in Figure 1, a process of interpolation for the luminance components includes:

(1) Firstly, vertical interpolation is performed, where interpolation is performed using A and two integer pixels which are the closest and the second closest just above A as well as C and two integer pixels which are the closest and the second closest just below C to obtain 1/16-pel with sixteen different phases between the integer pixels A and C, and interpolation is performed using B and two integer pixels which are the closest and the second closest just above B as well as D and two integer pixels which are the closest and the second closest just below D to obtain 1/16-pel with sixteen different phases between the integer pixels B and D.

(2) Then, horizontal interpolation is performed, where interpolation is performed using A and two integer pixels which are the closest and the second closest on the left side of A as well as B and two integer pixels which are the closest and the second closest on the right side of B to obtain 1/16-pel with sixteen different phases between the integer pixels A and B. Other 1/16-pel, such as the pixel with a phase of 4 in the middle of Figure 1, are obtained from interpolation performed by luminance interpolation filters with a phase of 4, using a 1/16-pel with a phase of 8 between A and C, a 1/16-pel with a phase of 8 between B and D, a 1/16-pel with a phase of 8 obtained by vertical interpolation between the integer pixel which is the closest on the left side of A and the integer pixel which is the closest on the left side of C, a 1/16-pel with a phase of 8 obtained by vertical interpolation between the integer pixel which is the second closest on the left side of A and the integer pixel which is the second closest on the left side of C, a 1/16-pel with a phase of 8 obtained by vertical interpolation between the integer pixel which is the closest on the right side of B and the integer pixel which is the closest on the right side of D, and a 1/16-pel with a phase of 8 obtained by vertical interpolation between the integer pixel which is the second closest on the right side of B and the integer pixel which is the second closest on the right side of D.

As illustrated in Figure 2, a process of interpolation for the chrominance components includes:

(1) Firstly, vertical interpolation is performed, where interpolation is performed using A and C to obtain 1/8-pel with eight different phases between the integer pixels A and C, and interpolation is performed using B and D to obtain 1/8-pel with eight different phases between the integer pixels B and D.

(2) Then, horizontal interpolation is performed, where interpolation is performed using A and B to obtain 1/8-pel with eight different phases between the integer pixels A and B. Other 1/8-pel, such as the pixel with a phase of 2 in the middle of Figure 2, are obtained from interpolation performed by chrominance interpolation filter with a phase of 2, using a 1/8-pel with a phase of 3 between A and C, and a 1/8-pel with a phase of 3 between B and D.

*Embodiment 3*

In this embodiment, interpolation with a 1/8-pel accuracy is used for the luminance components, and the filter for performing interpolation is provided with 6 taps. Tap coefficients are dependent upon phases, particularly as illustrated in Figure 2 as follows:

When the phase is 0, the tap coefficients are [0, 0, 32, 0, 0, 0]/32; when the phase is 1, the tap coefficients are [1, -3, 31, 4, -1, 0]/32; when the phase is 2, the tap coefficients are [1, -4, 28, 9, -2, 0]/32; when the phase is 3, the tap coefficients are [1, -5, 25, 14, -3, 0]/32; when the phase is 4, the tap coefficients are [1, -5, 20, 20, -5, 1]/32; when the phase is 5, the tap coefficients are [0, -3, 14, 25, -5, 1]/32; when the phase is 6, the tap coefficients are [0, -2, 9, 28, -4, 1]/32; when the phase is 7, the tap coefficients are [0, -1, 4, 31, -3, 1]/32.

Interpolation with a 1/8-pel accuracy is used for the chrominance components, and the filter for performing interpolation is provided with 2 taps. Tap coefficients are dependent upon phases, particularly as illustrated in Figure 2 as follows:

When the phase is 0, the tap coefficients are [32, 0]/32; when the phase is 1, the tap coefficients are [28, 4]/32; when the phase is 2, the tap coefficients are [25, 7]/32; when the phase is 3, the tap coefficients are [20, 12]/32; when the phase is 4, the tap coefficients are [16, 16]/32; when the phase is 5, the tap coefficients are [12, 20]/32; when the phase is 6, the tap coefficients are [7, 25]/32; when the phase is 7, the tap coefficients are [4, 28]/32.

As illustrated in Figure 2, a process of interpolation for the luminance components includes:

(1) Firstly, vertical interpolation is performed, where interpolation is performed using A and two integer pixels which are the closest and the second closest just above A as well as C and two integer pixels which are the closest and the second closest just below C to obtain 1/8-pel with eight different phases between the integer pixels A and C, and interpolation is performed using B and two integer pixels which are the closest and the second closest just above B as well as D and two integer pixels which are the closest and the second closest just below D to obtain 1/8-pel with eight different phases between the integer pixels B and D.

(2) Then, horizontal interpolation is performed, where interpolation is performed using A and two integer pixels which are the closest and the second closest on the left side of A as well as B and two integer pixels which are the closest and the second closest on the right side of B to obtain 1/8-pel with eight different phases between the integer pixels A and B. Other 1/16-pel, such as the pixel with a phase of 2 in the middle of Figure 2, are obtained from interpolation performed by luminance interpolation filters with a phase of 2, using a 1/8-pel with a phase of 3 between A and C, a 1/8-pel with a phase of 3 between B and D, a 1/8-pel with a phase of 3 obtained by vertical interpolation between the integer pixel which is the closest on the left side of A and the integer pixel which is the closest on the left side of C, a 1/8-pel with a phase of 3 obtained by vertical interpolation between the integer pixel which is the second closest on the left side of A and the integer pixel which is the second closest on the left side of C, a 1/8-pel with a phase of 3 obtained by vertical interpolation between the integer pixel which is the closest on the right side of B and the integer pixel which is the closest on the right side of D, and a 1/8-pel with a phase of 3 obtained by vertical interpolation between the integer pixel which is the second closest on the right side of B and the integer pixel which is the second closest on the right side of D.

As illustrated in Figure 2, a process of interpolation for the chrominance components includes:

(1) Firstly, vertical interpolation is performed, where interpolation is performed using A and C to obtain 1/8-pel with eight different phases between the integer pixels A and C, and interpolation is performed using B and D to obtain 1/8-pel with eight different phases between the integer pixels B and D.

(2) Then, horizontal interpolation is performed, where interpolation is performed using A and B to obtain 1/8-pel with eight different phases between the integer pixels A and B. Other 1/8-pel, such as the pixel with a phase of 2 in the middle of Figure 2, are obtained through interpolation by chrominance interpolation filter with a phase of 2, using a 1/8-pel with a phase of 3 between A and C, and a 1/8-pel with a phase of 3 between B and D.

*Embodiment 4*

In this embodiment, 4-tap interpolation filters with a 1/16-pel accuracy are used for the luminance components. Tap coefficients are dependent upon phases, particularly as illustrated in Figure 1 as follows:

When the phase is 0, the tap coefficients are [0, 32, 0, 0]/32; when the phase is 1, the tap coefficients are [-2, 32, 2, 0]/32; when the phase is 2, the tap coefficients are [-3, 32, 4, -1]/32; when the phase is 3, the tap coefficients are [-4, 31, 6, -1]/32; when the phase is 4, the tap coefficients are [-5, 29, 9, -2]/32; when the phase is 5, the tap coefficients are [-5, 28, 12, -3]/32; when the phase is 6, the tap coefficients are [-5, 26, 15, -4]/32; when the phase is 7, the tap coefficients are [-5, 23, 18, -4]/32; when the phase is 8, the tap coefficients are [-5, 21, 21, -5]/32; when the phase is 9, the tap coefficients are [-4, 18, 23, -5]/32; when the phase is 10, the tap coefficients are [-4, 15, 26, -5]/32; when the phase is 11, the tap coefficients are [-3, 12, 28, -5]/32; when the phase is 12, the tap coefficients are [-2, 9, 29, -5]/32; when the phase is 13, the tap coefficients are [-1, 6, 31, -4]/32; when the phase is 14, the tap coefficients are [-1, 4, 31, -3]/32; when the phase is 15, the tap coefficients are [0, 2, 32, -2]/32.

Interpolation filters with a 1/16-pel accuracy is used for the chrominance components, and the filter for performing interpolation is provided with 2 taps. Tap coefficients are dependent upon phases, particularly as illustrated in Figure 1 as follows:

When the phase is 0, the tap coefficients are [32, 0]/32; when the phase is 1, the tap coefficients are [30, 2]/32; when the phase is 2, the tap coefficients are [28, 4]/32; when the phase is 3, the tap coefficients are [27, 5]/32; when the phase is 4, the tap coefficients are [25, 7]/32; when the phase is 5, the tap coefficients are [22, 10]/32; when the phase is 6, the tap coefficients are [20, 12]/32; when the phase is 7, the tap coefficients are [18, 14]/32; when the phase is 8, the tap coefficients are [16, 16]/32; when the phase is 9, the tap coefficients are [14, 18]/32; when the phase is 10, the tap coefficients are [12,20]/32; when the phase is 11, the tap coefficients are [10, 22]/32; when the phase is 12, the tap coefficients are [7, 25]/32; when the phase is 13, the tap coefficients are [5, 27]/32; when the phase is 14, the tap coefficients are [4, 28]/32; when the phase is 15, the tap coefficients are [2, 30]/32.

As illustrated in Figure 1, a process of interpolation for the luminance components includes:

(1) Firstly, vertical interpolation is performed, where interpolation is performed using A and the integer pixel which is the closest just above A as well as C and the integer pixel which is the closest just below C to obtain 1/16-pel with sixteen different phases between the integer pixels A and C, and interpolation is performed using B and the integer pixel which is the closest just above B as well as D and the integer pixel which is the closest just below D to obtain 1/16-pel with sixteen different phases between the integer pixels B and D.

(2) Then, horizontal interpolation is performed, where interpolation is performed using A and the integer pixel which is the closest on the left side of A as well as B and the integer pixel which is the closest on the right side of B to obtain 1/16-pel with sixteen different phases between the integer pixels A and B. Other 1/16-pel, such as the pixel with a phase of 4 in the middle of Figure 1, are obtained from interpolation performed by luminance interpolation filters with a phase of 4, using a 1/16-pel with a phase of 8 between A and C, a 1/16-pel with a phase of 8 between B and D, a 1/16-pel with a phase of 8 obtained by vertical interpolation between the integer pixel which is the closest on the left side of A and the integer pixel which is the closest on the left side of C, and a 1/16-pel with a phase of 8 obtained by vertical interpolation between the integer pixel which is the closest on the right side of B and the integer pixel which is the closest on the right side of D. As illustrated in Figure 1, when interpolation is performed for the chrominance components, firstly in vertical interpolation, interpolation is performed for A and C to obtain 1/16-pel with sixteen different phases between the integer pixels A and C, and interpolation is performed for B and D to obtain 1/16-pel with sixteen different phases between the integer pixels B and D; and then in horizontal interpolation, interpolation is performed for A and B to obtain 1/16-pel with sixteen different phases between the integer pixels A and B, and other 1/16-pel, such as the pixel with a phase of 4 in the middle of Figure 1, are obtained from interpolation performed by chrominance interpolation filters with a phase of 4, using a 1/16-pel with a phase of 8 between A and C, and a 1/16-pel with a phase of 8 between B and D.

*Embodiment 5*

In this embodiment, 4-tap interpolation filters with a 1/16-pel accuracy are used for the luminance components. Tap coefficients are dependent upon phases, particularly as illustrated in Figure 1 as follows:

When the phase is 0, the tap coefficients are [0, 32, 0, 0]/32; when the phase is 1, the tap coefficients are [-2, 32, 2, 0]/32; when the phase is 2, the tap coefficients are [-3, 32, 4, -1]/32; when the phase is 3, the tap coefficients are [-4, 31, 6, -1]/32; when the phase is 4, the tap coefficients are [-5, 29, 9, -2]/32; when the phase is 5, the tap coefficients are [-5, 28, 12, -3]/32; when the phase is 6, the tap coefficients are [-5, 26, 15, -4]/32; when the phase is 7, the tap coefficients are [-5, 23, 18, -4]/32; when the phase is 8, the tap coefficients are [-5, 21, 21, -5]/32; when the phase is 9, the tap coefficients are [-4, 18, 23, -5]/32; when the phase is 10, the tap coefficients are [-4, 15, 26, -5]/32; when the phase is 11, the tap coefficients are [-3, 12, 28, -5]/32; when the phase is 12, the tap coefficients are [-2, 9, 29, -5]/32; when the phase is 13, the tap coefficients are [-1, 6, 31, -4]/32; when the phase is 14, the tap coefficients are [-1, 4, 31, -3]/32; when the phase is 15, the tap coefficients are [0, 2, 32, -2]/32.

Interpolation with a 1/8-pel accuracy is used for the chrominance components, and the filter for performing interpolation is provided with 2 taps. Tap coefficients are dependent upon phases, particularly as illustrated in Figure 2 as follows:

When the phase is 0, the tap coefficients are [32, 0]/32; when the phase is 1, the tap coefficients are [28, 4]/32; when the phase is 2, the tap coefficients are [25, 7]/32; when the phase is 3, the tap coefficients are [20, 12]/32; when the phase is 4, the tap coefficients are [16, 16]/32; when the phase is 5, the tap coefficients are [12, 20]/32; when the phase is 6, the tap coefficients are [7, 25]/32; when the phase is 7, the tap coefficients are [4, 28]/32.

As illustrated in Figure 1, a process of interpolation for the luminance components includes:

(1) Firstly, vertical interpolation is performed, where interpolation is performed using A and the integer pixel which is the closest just above A as well as C and the integer pixel which is the closest just below C to obtain 1/16-pel with sixteen different phases between the integer pixels A and C, and interpolation is performed using B and the integer pixel which is the closest just above B as well as D and the integer pixel which is the closest just below D to obtain 1/16-pel with sixteen different phases between the integer pixels B and D.

(2) Then, horizontal interpolation is performed, where interpolation is performed using A and the integer pixel which is the closest on the left side of A as well as B and the integer pixel which is the closest on the right side of B to obtain 1/16-pel with sixteen different phases between the integer pixels A and B. Other 1/16-pel, such as the pixel with a phase of 4 in the middle of Figure 1, are obtained from interpolation performed by luminance interpolation filters with a phase of 4, using a 1/16-pel with a phase of 8 between A and C, a 1/16-pel with a phase of 8 between B and D, a 1/16-pel with a phase of 8 obtained by vertical interpolation between the integer pixel which is the closest on the left side of A and the integer pixel which is the closest on the left side of C, and a 1/16-pel with a phase of 8 obtained by vertical interpolation between the integer pixel which is the closest on the right side of B and the integer pixel which is the closest on the right side of D. As illustrated in Figure 2, when interpolation is performed for the chrominance components, firstly in vertical interpolation, interpolation is performed using A and C to obtain 1/8-pel with eight different phases between the integer pixels A and C, and interpolation is performed using B and D to obtain 1/8-pel with eight different phases between the integer pixels B and D; and then in horizontal interpolation, interpolation is performed using A and B to obtain 1/8-pel with eight different phases between the integer pixels A and B, and other 1/8-pel, such as the pixel with a phase of 2 in the middle of Figure 2, are obtained from interpolation performed by chrominance interpolation filters with a phase of 2, using a 1/8-pel with a phase of 3 between A and C, and a 1/8-pel with a phase of 3 between B and D.

*Embodiment 6*

In this embodiment, 4-tap interpolation filters with a 1/8-pel accuracy are used for the luminance components. Tap coefficients are dependent upon phases, particularly as illustrated in Figure 2 as follows:

When the phase is 0, the tap coefficients are [0, 32, 0, 0]/32; when the phase is 1, the tap coefficients are [-3, 32, 4, -1]/32; when the phase is 2, the tap coefficients are [-5, 29, 9, -2]/32; when the phase is 3, the tap coefficients are [-5, 26, 15, -4]/32; when the phase is 4, the tap coefficients are [-5, 21, 21, -5]/32; when the phase is 5, the tap coefficients are [-4, 15, 26, -5]/32; when the phase is 6, the tap coefficients are [-2, 9, 29, -5]/32; when the phase is 7, the tap coefficients are [-1, 4, 31, -3]/32.

Interpolation with a 1/8-pel accuracy is used for the chrominance components, and the filter for performing interpolation is provided with 2 taps. Tap coefficients are dependent upon phases, particularly as illustrated in Figure 2 as follows:

When the phase is 0, the tap coefficients are [32, 0]/32; when the phase is 1, the tap coefficients are [28, 4]/32; when the phase is 2, the tap coefficients are [25, 7]/32; when the phase is 3, the tap coefficients are [20, 12]/32; when the phase is 4, the tap coefficients are [16, 16]/32; when the phase is 5, the tap coefficients are [12, 20]/32; when the phase is 6, the tap coefficients are [7, 25]/32; when the phase is 7, the tap coefficients are [4, 28]/32.

As illustrated in Figure 2, a process of interpolation for the luminance components includes:

(1) Firstly, vertical interpolation is performed, where interpolation is performed using A and the integer pixel which is the closest just above A as well as C and the integer pixel which is the closest just below C to obtain 1/8-pel with eight different phases between the integer pixels A and C, and interpolation is performed using B and the integer pixel which is the closest just above B as well as D and the integer pixel which is the closest just below D to obtain 1/8-pel with eight different phases between the integer pixels B and D.

(2) Then, horizontal interpolation is performed, where interpolation is performed using A and the integer pixel which is the closest on the left side of A as well as B and the integer pixel which is the closest on the right side of B to obtain 1/8-pel with eight different phases between the integer pixels A and B. Other 1/8-pel, such as the pixel with a phase of 2 in the middle of Figure 2, are obtained from interpolation performed by luminance interpolation filters with a phase of 2, using a 1/8-pel with a phase of 3 between A and C, a 1/8-pel with a phase of 3 between B and D, a 1/8-pel with a phase of 3 obtained by vertical interpolation between the integer pixel which is the closest on the left side of A and the integer pixel which is the closest on the left side of C, and a 1/8-pel with a phase of 3 obtained by vertical interpolation between the integer pixel which is the closest on the right side of B and the integer pixel which is the closest on the right side of D. As illustrated in Figure 2, when interpolation is performed for the chrominance components, firstly in vertical interpolation, interpolation is performed using A and C to obtain 1/8-pel with eight different phases between the integer pixels A and C, and interpolation is performed using B and D to obtain 1/8-pel with eight different phases between the integer pixels B and D; and then in horizontal interpolation, interpolation is performed using A and B to obtain 1/8-pel with eight different phases between the integer pixels A and B, and other 1/8-pel, such as the pixel with a phase of 2 in the middle of Figure 2, are obtained from interpolation performed by chrominance interpolation filters with a phase of 2, using a 1/8-pel with a phase of 3 between A and C, and a 1/8-pel with a phase of 3 between B and D.

*Embodiment 7*

In this embodiment, interpolation with a 1/16-pel accuracy is used for the luminance components, and the filter for performing interpolation is provided with 6 taps. Tap coefficients are dependent upon phases, particularly as illustrated in Figure 1 as follows:

When the phase is 0, the tap coefficients are [0, 0, 32, 0, 0, 0]/32; when the phase is 1, the tap coefficients are [0, -2, 32, 2, 0, 0]/32; when the phase is 2, the tap coefficients are [1, -3, 31, 4, -1, 0]/32; when the phase is 3, the tap coefficients are [1, -4, 30, 7, -2, 0]/32; when the phase is 4, the tap coefficients are [1, -4, 28, 9, -2, 0]/32; when the phase is 5, the tap coefficients are [1, -5, 27, 11, -3, 1]/32; when the phase is 6, the tap coefficients are [1, -5, 25, 14, -3, 0]/32; when the phase is 7, the tap coefficients are [1, -5, 22, 17, -4, 1]/32; when the phase is 8, the tap coefficients are [1, -5, 20, 20, -5, 1]/32; when the phase is 9, the tap coefficients are [1, -4, 17, 22, -5, 1]/32; when the phase is 10, the tap coefficients are [0, -3, 14, 25, -5, 1]/32; when the phase is 11, the tap coefficients are [1, -3, 11, 27, -5, 1]/32; when the phase is 12, the tap coefficients are [0, -2, 9, 28, -4, 1]/32; when the phase is 13, the tap coefficients are [0, -2, 7, 30, -4, 1]/32; when the phase is 14, the tap coefficients are [0, -1, 4, 31, -3, 1]/32; when the phase is 15, the tap coefficients are [0, 0, 2, 32, -2, 0]/32.

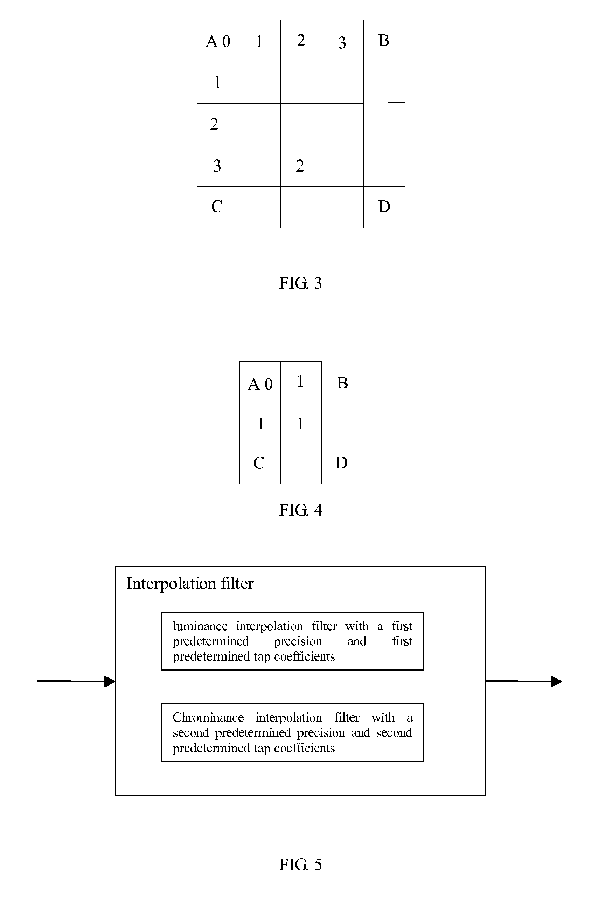

Interpolation with a 1/4-pel accuracy is used for the chrominance components, and the filter for performing interpolation is provided with 2 taps. Tap coefficients are dependent upon phases, particularly as illustrated in Figure 3 as follows:

When the phase is 0, the tap coefficients are [32, 0]/32; when the phase is 1, the tap coefficients are [25, 7]/32; when the phase is 2, the tap coefficients are [16, 16]/32; when the phase is 3, the tap coefficients are [7, 25]/32.

As illustrated in Figure 1, a process of interpolation for the luminance components includes:

(1) Firstly, vertical interpolation is performed, where interpolation is performed using A and two integer pixels which are the closest and the second closest just above A as well as C and two integer pixels which are the closest and the second closest just below C to obtain 1/16-pel with sixteen different phases between the integer pixels A and C, and interpolation is performed using B and two integer pixels which are the closest and the second closest just above B as well as D and two integer pixels which are the closest and the second closest just below D to obtain 1/16-pel with sixteen different phases between the integer pixels B and D.

(2) Then, horizontal interpolation is performed, where interpolation is performed using A and two integer pixels which are the closest and the second closest on the left side of A as well as B and two integer pixels which are the closest and the second closest on the right side of B to obtain 1/16-pel with sixteen different phases between the integer pixels A and B. Other 1/16-pel, such as the pixel with a phase of 4 in the middle of Figure 1, are obtained from interpolation performed by luminance interpolation filters with a phase of 4, using a 1/16-pel with a phase of 8 between A and C, a 1/16-pel with a phase of 8 between B and D, a 1/16-pel with a phase of 8 obtained by vertical interpolation between the integer pixel which is the closest on the left side of A and the integer pixel which is the closest on the left side of C, a 1/16-pel with a phase of 8 obtained by vertical interpolation between the integer pixel which is the second closest on the left side of A and the integer pixel which is the second closest on the left side of C, a 1/16-pel with a phase of 8 obtained by vertical interpolation between the integer pixel which is the closest on the right side of B and the integer pixel which is the closest on the right side of D, and a 1/16-pel with a phase of 8 obtained by vertical interpolation between the integer pixel which is the second closest on the right side of B and the integer pixel which is the second closest on the right side of D.

As illustrated in Figure 3, a process of interpolation for the chrominance components includes:

(1) Firstly, vertical interpolation is performed, where interpolation is performed using A and C to obtain 1/4-pel with four different phases between the integer pixels A and C, and interpolation is performed using B and D to obtain 1/4-pel with four different phases between the integer pixels B and D.

(2) Then, horizontal interpolation is performed, where interpolation is performed using A and B to obtain 1/4-pel with four different phases between the integer pixels A and B. Other 1/4-pel, such as the pixel with a phase of 2 in the middle of Figure 2, are obtained from interpolation performed by chrominance interpolation filters with a phase of 2, using a 1/4-pel with a phase of 3 between A and C, and a 1/4-pel with a phase of 3 between B and D.

*Embodiment 8*

In this embodiment, interpolation with a 1/16-pel accuracy is used for the luminance components, and the filter for performing interpolation is provided with 6 taps. Tap coefficients are dependent upon phases, particularly as illustrated in Figure 1 as follows:

When the phase is 0, the tap coefficients are [0, 0, 32, 0, 0, 0]/32; when the phase is 1, the tap coefficients are [0, -2, 32, 2, 0, 0]/32; when the phase is 2, the tap coefficients are [1, -3, 31, 4, -1, 0]/32; when the phase is 3, the tap coefficients are [1, -4, 30, 7, -2, 0]/32; when the phase is 4, the tap coefficients are [1, -4, 28, 9, -2, 0]/32; when the phase is 5, the tap coefficients are [1, -5, 27, 11, -3, 1]/32; when the phase is 6, the tap coefficients are [1, -5, 25, 14, -3, 0]/32; when the phase is 7, the tap coefficients are [1, -5, 22, 17, -4, 1]/32; when the phase is 8, the tap coefficients are [1, -5, 20, 20, -5, 1]/32; when the phase is 9, the tap coefficients are [1, -4, 17, 22, -5, 1]/32; when the phase is 10, the tap coefficients are [0, -3, 14, 25, -5, 1]/32; when the phase is 11, the tap coefficients are [1, -3, 11, 27, -5, 1]/32; when the phase is 12, the tap coefficients are [0, -2, 9, 28, -4, 1]/32; when the phase is 13, the tap coefficients are [0, -2, 7, 30, -4, 1]/32; when the phase is 14, the tap coefficients are [0, -1,4, 31, -3, 1]/32; when the phase is 15, the tap coefficients are [0, 0, 2, 32, -2, 0]/32.

2-tap interpolation filters N with a 1/2-pel accuracy are used for the chrominance components, and the filters for performing interpolation are provided with 2 taps. Tap coefficients are dependent upon phases, particularly as illustrated in Figure 4 as follows:

When the phase is 0, the tap coefficients are [32, 0]/32; when the phase is 1, the tap coefficients are [16, 16]/32.

As illustrated in Figure 1, a process of interpolation for the luminance components includes:

(1) Firstly, vertical interpolation is performed, where interpolation is performed using A and two integer pixels which are the closest and the second closest just above A as well as C and two integer pixels which are the closest and the second closest just below C to obtain 1/16-pel with sixteen different phases between the integer pixels A and C, and interpolation is performed using B and two integer pixels which are the closest and the second closest just above B as well as D and two integer pixels which are the closest and the second closest just below D to obtain 1/16-pel with sixteen different phases between the integer pixels B and D.

(2) Then, horizontal interpolation is performed, where interpolation is performed using A and two integer pixels which are the closest and the second closest on the left side of A as well as B and two integer pixels which are the closest and the second closest on the right side of B to obtain 1/16-pel with sixteen different phases between the integer pixels A and B. Other 1/16-pel, such as the pixel with a phase of 4 in the middle of Figure 1, are obtained from interpolation performed by luminance interpolation filters with a phase of 4, using a 1/16-pel with a phase of 8 between A and C, a 1/16-pel with a phase of 8 between B and D, a 1/16-pel with a phase of 8 obtained by vertical interpolation between the integer pixel which is the closest on the left side of A and the integer pixel which is the closest on the left side of C, a 1/16-pel with a phase of 8 obtained by vertical interpolation between the integer pixel which is the second closest on the left side of A and the integer pixel which is the second closest on the left side of C, a 1/16-pel with a phase of 8 obtained by vertical interpolation between the integer pixel which is the closest on the right side of B and the integer pixel which is the closest on the right side of D, and a 1/16-pel with a phase of 8 obtained by vertical interpolation between the integer pixel which is the second closest on the right side of B and the integer pixel which is the second closest on the right side of D. As illustrated in Figure 4, when interpolation is performed for the chrominance components, firstly in vertical interpolation, interpolation is performed using A and C to obtain 1/2-pel with two different phases between the integer pixels A and C, and interpolation is performed using B and D to obtain 1/2-pel with two different phases between the integer pixels B and D; and then in horizontal interpolation, interpolation is performed using A and B to obtain 1/2-pel with two different phases between the integer pixels A and B. Other 1/2-pel, such as the pixel with a phase of 1 in the middle of Figure 2, are obtained from interpolation performed by chrominance interpolation filters with a phase of 1, using a 1/2-pel with a phase of 1 between A and C, and a 1/2-pel with a phase of 1 between B and D.

The tap coefficients described above can be multiplied with an integer power of 2. For instance, 2-tap interpolation filters N with a 1/2-pel accuracy are used for the chrominance components, and the filters for performing interpolation are provided with 2 taps. Tap coefficients are dependent upon phases. When the phase is 0, the tap coefficients are [32, 0]/32, and when the phase is 1, the tap coefficients are [16, 16]/32. The tap coefficients can be modified through multiplying with an integer power of 2 in such a way that when the phase is 0, the tap coefficients are [16, 0]/16, and when the phase is 1, the tap coefficients are [8, 8]/16, or when the phase is 0, the tap coefficients are [64, 0]/64, and when the phase is 1, the tap coefficients are [32, 32]/64.

The invention also provides an embodiment of a device for performing interpolation in scalable video coding, a specific implementation structure of which is as illustrated in Figure 5, primarily including:

Luminance interpolation filters with a first predetermined precision and first predetermined tap coefficients adapted to perform an interpolation filtering process on luminance components;

Chrominance interpolation filters with a second predetermined precision and second predetermined tap coefficients adapted to perform an interpolation filtering process on chrominance components;

Where the first precision and the second precision are independent of each other, and the first predetermined tap coefficients and the second predetermined tap coefficients are independent of each other.

The forms of interpolation filters which can be used as the luminance interpolation filters with the first predetermined precision and the first predetermined tap coefficients and the chrominance interpolation filters with the second predetermined precision and the second predetermined tap coefficients have been exemplified and described, and thus repeated descriptions will be avoided here.

According to a demand for a compression performance in practical application, the interpolation filters can be of an asymmetric configuration, and of course can also be of a symmetric configuration.

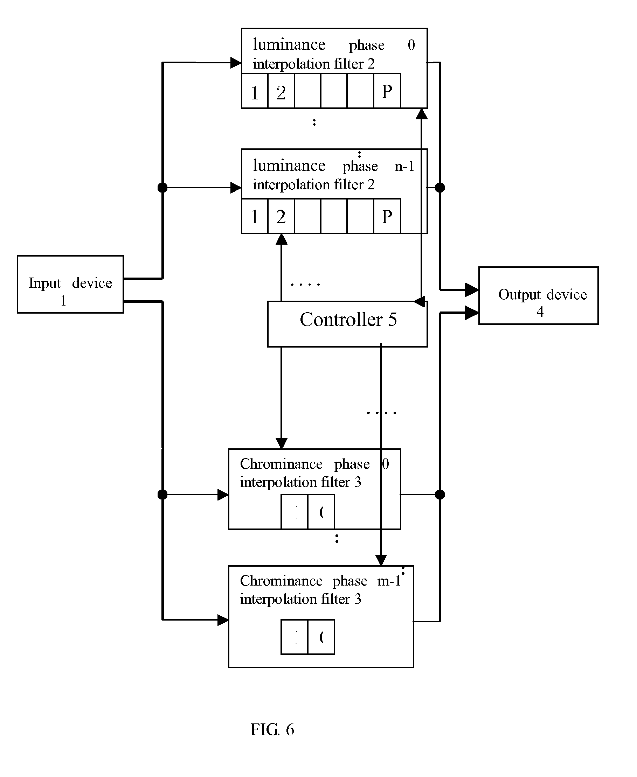

Embodiments of the device of the invention will be described hereinafter taking embodiments 1 and 2 for example with reference to the Figure 6.

*Embodiment 1*

Figure 6 illustrates a device for performing interpolation in scalable video coding, which includes an input device 1 for reading a pixel value of an integer pixel from a base layer, an interpolation filtering device 2 for performing n-phase interpolation filtering on luminance components, an interpolation device 3 for performing m-phase interpolation filtering on chrominance components, an output device 4 for outputting an interpolation result to an enhanced layer, and a controller 5 for controlling an interpolation process, where n can be 16 or 8, and m can be 16 or 8 or 4 or 2. The number P of taps of the interpolation filter for the luminance components can be 6 or 4, and the number Q of taps of the interpolation filter for the chrominance components can be 2 or 4 or 6. Here, the input device 1 for reading a pixel value of an integer pixel from a base layer, the interpolation filtering device 2 for performing n-phase interpolation filtering on luminance components, the interpolation device 3 for performing m-phase interpolation filtering on chrominance components, the output device 4 for outputting an interpolation result to an enhanced layer, and the controller 5 for controlling an interpolation process can be implemented in software programs or in hardware circuits on different platforms.

*Embodiment 2*

Figure 6 illustrates a device for performing interpolation in scalable video coding, which includes an input device 1 for reading a pixel value of an integer pixel from a base layer, a 6-tap interpolation filtering device 2 for performing 16-phase interpolation filtering on luminance components, a 2-tap interpolation device 3 for performing 16-phase interpolation filtering on chrominance components, an output device 4 for outputting an interpolation result to an enhanced layer, and a controller 5 for controlling an interpolation process.

In inter-layer prediction, the input device 1 for reading a pixel value of an integer pixel from a base layer reads a pixel value of an integer pixel from a base layer, and transmits luminance components and chrominance components through a data bus respectively to the 6-tap interpolation filtering device 2 for performing 16-phase interpolation filtering on luminance components and the 2-tap interpolation device 3 for performing 16-phase interpolation filtering on chrominance components. Under the control of the controller 5, interpolation is performed, using corresponding interpolation filters, for different phases of the luminance components of the base layer in the 6-tap interpolation filtering device 2 for performing 16-phase interpolation filtering on luminance components to obtain 1-16-pel, which are transmitted to the output device 4 for outputting an interpolation result to an enhanced layer for performing interpolation prediction of scalable compression; and under the control of the controller 5, interpolation is performed, using corresponding interpolation filters, for different phases of the chrominance components of the base layer in the 2-tap interpolation filtering device 3 for performing 16-phase interpolation filtering on chrominance components to obtain 1-16-pel, which are transmitted to the output device 4 for outputting an interpolation result to an enhanced layer for performing interpolation prediction of scalable compression.

The foregoing embodiments are intended to be illustrative but not limitative of the invention. Any modifications and variations made to the invention without departing the spirit and scope of the invention claims should fall within the claimed scope of the invention.

## Claims

1. A method for performing interpolation in scalable video coding, which is used for inter-layer prediction in scalable video coding, the inter-layer prediction comprising performing interpolation filtering processes on luminance components and chrominance components, wherein the performing of the interpolation filtering processes comprise:
performing the interpolation filtering processes on the luminance components and the chrominance components respectively by using interpolation filters with precisions determined independently of each other, tap coefficients of the interpolation filters respectively used for the interpolation filtering processes on the luminance components and the chrominance components being determined independently of each other.

2. The method for performing interpolation in scalable video coding according to claim 1, wherein the interpolation filters comprise an asymmetric configuration.

3. The method for performing interpolation in scalable video coding according to claim 1, wherein the inter-layer prediction refers to an intra-frame base layer mode.

4. The method for performing interpolation in scalable video coding according to claim 1, 2 or 3, wherein in use of an ordinary space scalability technology, the interpolation filters comprise:
6-tap interpolation filters with a 1/2-pel accuracy for the luminance components, and 2-tap interpolation filters with a 1/2-pel accuracy for the chrominance components;
or
4-tap interpolation filters with a 1/2-pel accuracy for the luminance components, and 2-tap interpolation filters with a 1/2-pel accuracy for the chrominance components.

5. The method for performing interpolation in scalable video coding according to claim 4, wherein:
the 6-tap interpolation filters with a 1/2-pel accuracy are in a form of:
{*Co*₁, *Co*₂, *Co*₃, *Co*₄, *Co*₅, *Co*₆} /[*Co*₁ + *Co*₂ + *Co*₃ + *Co*₄ + *Co*₅ + *Co*₆], *Coᵢ* being the tap coefficients of the filters, where *i* =1...6 , and specific tap coefficients are [1, -5, 20, 20, -5, 1]/32; and the tap coefficients *Coᵢ* of the interpolation filter also take values comprising *round* (*Coᵢ* × *2^{j}*) ± 1, where *i* =1...6 , and *j* is an arbitrary integer;
the 4-tap interpolation filters with a 1/2-pel accuracy are in a form of:
{*Eo*₁, *Eo*₂, *Eo*₃, *Eo*₄}/[*Eo*₁ +*Eo*₂ + *Eo*₃ + *Eo*₄], *Eoᵢ* being the tap coefficients of the filters, where *i* =1...4, and specific tap coefficients are [-5, 21, 21, -5]/32; and the tap coefficients *Eoᵢ* of the interpolation filter also take values comprising *round* (*Eoᵢ* × *2'*) ±1, where *i* =1...4, and *j* is an arbitrary integer;
the 2-tap interpolation filters with a 1/2-pel accuracy are in a form of:
{*Do*₁, *Do*₂} /[*Do*₁ + *Do*₂], *Doᵢ* being the tap coefficients of the filters, where *i* =1...2, and specific tap coefficients are [16, 16]/32; and the tap coefficients *Doᵢ* of the interpolation filters also take values comprising *round* (*Doᵢ* × 2*^{j}*) ± 1, where *i* =1...2, and *j* is an arbitrary integer.

6. The method for performing interpolation in scalable video coding according to claim 1, 2 or 3, wherein in use of an Extended Space Scalability (ESS) technology, the interpolation filters comprise:
6-tap interpolation filters with a 1/16-pel accuracy for the luminance components, and 2-tap interpolation filters with a 1/16-pel accuracy or 2-tap interpolation filters with a 1/8-pel accuracy or 2-tap interpolation filters with a 1/4-pel accuracy or 2-tap interpolation filters with a 1/2-pel accuracy for the chrominance components;
or
4-tap interpolation filters with a 1/16-pel accuracy for the luminance components, and 2-tap interpolation filters with a 1/16-pel accuracy or 2-tap interpolation filters with a 1/8-pel accuracy or 2-tap interpolation filters with a 1/4-pel accuracy or 2-tap interpolation filters with a 1/2-pel accuracy for the chrominance components;
or
6-tap interpolation filters with a 1/8-pel accuracy for the luminance components, and 2-tap interpolation filters with a 1/8-pel accuracy or 2-tap interpolation filters with a 1/4-pel accuracy or 2-tap interpolation filters with a 1/2-pel accuracy for the chrominance components;
or
4-tap interpolation filters with a 1/8-pel accuracy for the luminance components, and 2-tap interpolation filters with a 1/8-pel accuracy or 2-tap interpolation filters with a 1/4-pel accuracy or 2-tap interpolation filters with a 1/2-pel accuracy for the chrominance components.

7. The method for performing interpolation in scalable video coding according to claim 6, wherein:
the 6-tap interpolation filters with a 1/16-pel accuracy are in a form of:
{*Go*₁ *Go*₂, *Go*₃, *Go*₄, *Go*₅, *Go*₆} *l*[*Go*₁ *+ Go*₂ *+ Go*₃ *+ Go*₄ *+ Go*₅ *+ Go*₆], *Goᵢ* being the tap coefficients of the filters, where *i* =1...6, and specific tap coefficients are dependent upon phases: From phase 0 to phase 15, corresponding tap coefficients are, respectively, [0, 0, 32, 0, 0, 0]/32, [0, -2, 32, 2, 0, 0]/32, [1, -3, 31, 4, -1, 0]/32, [1, -4, 30, 7, -2, 0]/32, [1, -4, 28, 9, -2, 0]/32, [1, -5, 27, 11, -3, 1]/32, [1, -5, 25, 14, -3, 0]/32, [1, -5, 22, 17, -4, 1]/32, [1, -5, 20, 20, -5, 1]/32, [1, -4, 17, 22, -5, 1]/32, [0, -3, 14, 25, -5, 1]/32, [1, -3, 11, 27, -5, 1]/32, [0, -2, 9, 28, -4, 1]/32, [0, -2, 7, 30, -4, 1]/32, [0, -1, 4, 31, -3, 1]/32, [0, 0, 2, 32, -2, 0]/32; and the tap coefficients of the interpolation filters *Goᵢ* also take values *comprising round* (*Goᵢ* × 2*^{j}*) ± 1, where *i* =1...6, and *j* is an arbitrary integer;
the 6-tap interpolation filters with a 1/8-pel accuracy are in a form of:
{*Io*₁, *Io*₂, *Io*₃, *Io*₄, *Io*₅, *Io*₆} *l* [*Io*₁ + *Io*₂ + *Io*₃ + *Io*₄ + *Io*₅ + *Io*₆] , *Ioᵢ* being the tap coefficients of the filters, where *i* =1...6 , and specific tap coefficients are dependent upon phases: From phase 0 to phase 8, corresponding tap coefficients are, respectively, [0, 0, 32, 0, 0, 0]/32, [1, -3, 31, 4, -1, 0]/32, [1, -4, 28, 9, -2, 0]/32, [1, -5, 25, 14, -3, 0]/32, [1, -5, 20, 20, -5, 1 ]/32, [0, -3, 14, 25, -5, 1]/32, [0, -2, 9, 28, -4, 1]/32, [0, -1, 4, 31, -3, 1]/32; and the tap coefficients of the interpolation filters *Ioᵢ* also take values comprising *round* (*Ioᵢ* × *2^{j}*) ± 1, where *i* =1...6 , and *j* is an arbitrary integer;
the 4-tap interpolation filters with a 1/16-pel accuracy are in a form of:
{*Ko*₁, *Ko*₂, *Ko*₃, *Ko*₄} /[*Ko*₁ + *Ko*₂ + *Ko*₃ + *Ko*₄], *Koᵢ* being the tap coefficients of the filters, where *i* =1...4 , and specific tap coefficients are dependent upon phases.: From phase 0 to phase 16, corresponding tap coefficients are, respectively, [0, 32, 0, 0]/32, [-2, 32, 2, 0]/32, [-3, 32, 4, -1]/32, [-4, 31, 6, -1]/32, [-5, 29, 9, -2]/32, [-5, 28, 12, -3]/32, [-5, 26, 15, -4]/32, [-5, 23, 18, -4]/32, [-5, 21, 21, -5]/32, [-4, 18, 23, -5]/32, , [-4, 15, 26, -5]/32, [-3, 12, 28, -5]/32, [-2, 9, 29, -5]/32, [-1, 6, 31, -4]/32, [-1, 4, 31, -3]/32, [0, 2, 32, -2]/32; and the tap coefficients of the interpolation filters *Koᵢ* also take values comprising *round* (*Koᵢ* × 2*^{j}*) ± 1, where *i* =1...4 , and *j* is an arbitrary integer;
the 4-tap interpolation filters with a 1/8-pel accuracy are in a form of:
{*Oo*₁, *Oo*₂, *Oo*₃, *Oo*₄} *l*[*Oo*₁ + *Oo*₂ + *Oo*₃ + *Oo*₄], *Ooᵢ* being the tap coefficients of the filters, where *i* =1... 4 , and specific tap coefficients are dependent upon phases: From phase 0 to phase 8, corresponding tap coefficients are, respectively, [0, 32, 0, 0]/32, [-3, 32, 4, -1]/32, [-5, 29, 9, -2]/32, [-5, 26, 15, -4]/32, [-5, 21, 21, -5]/32, , [-4, 15, 26, -5]/32, [-2, 9, 29, -5]/32, [-1, 4, 31, -3]/32; and the tap coefficients of the interpolation filters *Ooᵢ* also take values comprising *round* (*Ooᵢ* x 2*^{j}*) ± 1, where *i* =1 ... 4 , and *j* is an arbitrary integer;
the 2-tap interpolation filters with a 1/16-pel accuracy are in a form of {*Fo*₁, *Fo*₂}/[*Fo*₁ + *Fo*₂], *Foᵢ* being the tap coefficients of the filters, where *i* =1...2 , and specific tap coefficients are dependent upon phases: From phase 0 to phase 16, corresponding tap coefficients are, respectively, [32, 0]/32, [30, 2]/32, [28, 4]/32, [27, 5]/32, [25, 7]/32, [22, 10]/32, [20, 12]/32, [18, 14]/32, [16, 16]/32, [14, 18]/32, [12, 20]/32, [10, 22]/32, [7, 25]/32, [5, 27]/32, [4, 28]/32, [2, 30]/32; and the tap coefficients of the interpolation filters *Foᵢ* also take values comprising *round* (*Foᵢ* x 2*^{j}*) ± 1, where *i* = 1...2, and *j* is an arbitrary integer;
the 2-tap interpolation filters with a 1/8-pel accuracy are in a form of {*Ho*₁, *Ho*₂} /[*Ho*₁ + *Ho*₂], *Hoᵢ* being the tap coefficients of the filters, where *i* =1...2, and specific tap coefficients are dependent upon phases: From phase 0 to phase 8, corresponding tap coefficients are, respectively, [32, 0]/32, [28, 4]/32, [25, 7]/32, [20, 12]/32, [16, 16]/32, [12, 20]/32, [7, 25]/32, [4, 28]/32; and the tap coefficients of the interpolation filters *Hoᵢ* also take values comprising *round* (*Hoᵢ* × 2*^{j}*) ± 1, where *i* =1...2, and *j* is an arbitrary integer;
the 2-tap interpolation filters with a 1/4-pel accuracy are in a form of {*Mo*₁, *Mo*₂} /[*Mo*₁ + *Mo*₂], *Moᵢ* being the tap coefficients of the filters, wherein *i* =1...2, and specific tap coefficients are dependent upon phases: From phase 0 to phase 4, corresponding tap coefficients are, respectively, [32, 0]/32, [25, 7]/32, [16, 16]/32, [7, 25]/32; and the tap coefficients *Moᵢ* also take values comprising r*ound* (*Moᵢ* × *2^{j}*) ± 1, where *i* = 1...2, and *j* is an arbitrary integer;
the 2-tap interpolation filters with a 1/2-pel accuracy are in a form of {*No*₁, *No*₂} /[*No*₁ + *No*₂], *Noᵢ* being the tap coefficients of the filters, where *i* =1...2, and specific tap coefficients are dependent upon phases: when the phase is 0, the tap coefficients are [32, 0]/32, and when the phase is 1, the tap coefficients are [16, 16]/32; and the tap coefficients of the interpolation filters *Noᵢ* also take values comprising *round* (*Noᵢ* × 2*^{j}*) ± 1, where *i* =1...2, and *j* is an arbitrary integer.

8. A device for performing interpolation in scalable video coding, comprising:
luminance interpolation filters with a first predetermined precision and first predetermined tap coefficients adapted to perform an interpolation filtering process on luminance components;
chrominance interpolation filters with a second predetermined precision and second predetermined tap coefficients adapted to perform an interpolation filtering process on chrominance components,
where the first predetermined precision and the second predetermined precision are independent of each other, and the first predetermined tap coefficients and the second predetermined tap coefficients are independent of each other.

9. The device for performing interpolation in scalable video coding according to claim 8, wherein the interpolation filter comprises an asymmetric configuration.

10. The device for performing interpolation in scalable video coding according to claim 8 or 9, comprising:
an input device (1) for reading the pixel value of an integer pixel from a base layer;
a P-tap interpolation filtering device (2) for performing n-phase interpolation filtering on luminance components;
a Q-tap interpolation filtering device (3) for performing m-phase interpolation filtering on chrominance components;
an output device (4) for outputting an interpolation result to an enhanced layer; and
a controller (5) for controlling an interpolation process;
wherein one output of the input device (1) for reading the pixel value of an integer pixel from a base layer is connected with the output device (4) for outputting an interpolation result to an enhanced layer after passing through in parallel the P-tap interpolation filtering device (2) for performing n-phase interpolation filtering on luminance components, and the other output of the input device (1) for reading the pixel value of an integer pixel from a base layer is connected with the output device (4) for outputting an interpolation result to an enhanced layer after passing through in parallel the Q-tap interpolation device (3) for performing m-phase interpolation filtering on chrominance components; and n outputs of one end of the controller (5) for controlling an interpolation process are connected with the P-tap interpolation filtering device (2) for performing n-phase interpolation filtering on luminance components, and m outputs of the other end of the controller (5) for controlling an interpolation process are connected with the Q-tap interpolation device (3) for performing m-phase interpolation filtering on chrominance components.
